# DEMANDE DE BREVET EUROPEEN

(11) **EP 0 716 960 A1**
(43) Date de publication de la demande: **19.06.1996**
(21) Numéro de dépôt: 95402828.8
(22) Date de dépôt: 15.12.1995
(51) Int. Cl.: B60R 13/06, B60R 13/02

(54) **Dispositif de fixation d'un élément de garnissage sur un montant de carrosserie**

(30) Priorité: 16.12.1994 FR 9415185
(71) Demandeur: Société Anonyme dite: REGIE NATIONALE DES USINES RENAULT, F-92109 Boulogne Billancourt (FR)
(72) Inventeur: Ponceau, Philippe, F-78610 Le Perray-en-Yvelines (FR)
(74) Mandataire: Ernst-Schonberg, Michel

(57) **Abrégé**

Dispositif de fixation d'un élément de garnissage (20) sur un organe de retenue (21) porté par un montant de carrosserie (13) dont une zone marginale (20a) est chaussée par un profil d'étanchéité (16), caractérisé par le fait que la face de l'élément de garnissage tournée vers le montant (13) est surmontée par un pied support d'une clavette (25) de verrouillage dont une extrémité est engagée dans une partie d'encastrement mutuel dedits pied support (20) et organe de retenue (21) et dont l'autre extrémité est localisée à proximité de la zone marginale.

## Description

L'invention concerne un dispositif de fixation d'un élément de garnissage sur un montant de carrosserie tel qu'un montant latéral de pare-brise de véhicule.

On sait que les montants de pare-brise sont constitués par deux éléments de tôle extérieur et intérieur mis en forme par emboutissage.

Les éléments précités sont ainsi assemblés le long d'un bord de montage d'un profil d'étanchéité du pare-brise tandis qu'une branche interne dudit profil recouvre la zone marginale de l'élément de garnissage du montant.

Dans le but de solidariser l'élément de garnissage avec le montant, ce dernier porte des organes de retenue dudit élément rigidement liés à la paroi intérieure du montant. Toutefois ce dispositif est impropre à maintenir l'élément de garnissage au cours des déformations du montant du pare-brise ou d'une transmission d'efforts audit montant.

La publication FR-A-2601922 décrit une fixation par encastrement d'un élément de garnissage sur un profilé de maintien solidaire d'un bord de carrosserie. A cet effet l'élément de garnissage porte une arête clippée élastiquement dans une rainure de maintien portée par le profilé. Lorsque les bords du profilé et de l'élément de garnissage concourent à masquer la zone de clippage, il n'est guère possible de vérifier la qualité de la fixation.

La présente invention a pour but de remédier à l'inconvénient précité en proposant une fixation dans laquelle le montage du- profil d'étanchéité est rendu mécaniquement impossible tant que le maintien de l'élément de garnissage sur le montant latéral du pare-brise n'est pas réalisé.

L'invention a également pour but d'assurer le maintien de l'élément de garnissage à l'aide d'un verrou de secours.

Selon l'invention la face de l'élément de garnissage tournée vers le montant, est surmontée par un pied support d'une clavette de verrouillage dont une extrémité est engagée dans une partie d'encastrement mutuel desdits pied support et organe de retenue et dont l'autre extrémité est localisée à proximité de la zone marginale.

Selon une autre caractéristique de l'invention, la clavette s'étend extérieurement à la partie d'encastrement mutuel précitée, transversalement par rapport à la zone marginale du montant et de la ligne de montage du profil d'étanchéité.

Le dispositif ainsi réalisé, nécessite la mise en place préalable de la clavette dans la partie d'encastrement mutuel desdits pied support et organe de retenue et une manipulation préalable de la clavette avant le montage du profil d'étanchéité.

D'autres caractéristiques et avantages du dispositif apparaîtront à la lecture de la description d'un exemple de réalisation de celui-ci, en référence au dessin annexé dans lequel :
- la figure 1 est une représentation perspective de la partie avant d'un habitacle de véhicule automobile illustrant un montant latéral du pare-brise.
- la figure 2 est une section horizontale du montant de pare-brise selon la ligne II-II de la figure 1.
- la figure 3 est une section du dispositif selon la ligne III-III de la figure 2.
- la figure 4 est une section horizontale du montant de pare-brise illustrant la phase de montage de la clavette de verrouillage.

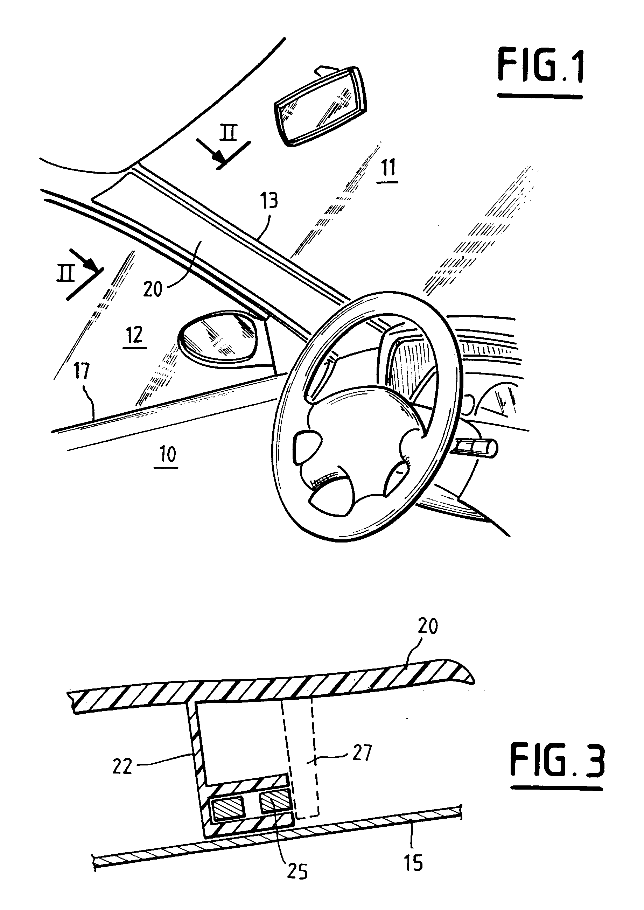

La figure 1 montre une partie avant de l'habitacle 10 limité par le pare-brise 11 et par une vitre latérale 12. Le pare-brise 11 est collé sur un bord d'assemblage d'un montant 13 constitué par une tôle extérieure 14 et par une tôle de doublage 15. Un autre bord d'assemblage porte un profil d'étanchéité 16 sur lequel vient en appui le cadre de la porte avant 17. Un élément de garnissage 20 est monté sur un ensemble d'organes de retenue 21 portés par la tôle de doublage 15 du montant 13. L'élément 20 est limité latéralement par une zone marginale 20a chaussée par une lèvre 16a du profil 16.

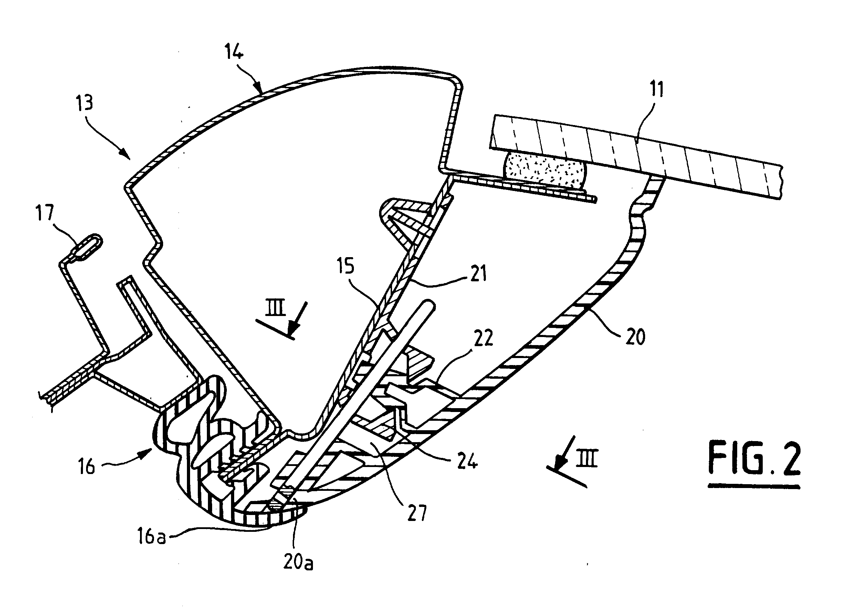

Selon l'invention, la face intérieure de l'élément de garnissage 20 tournée vers le montant 13 est surmontée par un pied 22 support d'une clavette de verrouillage 25 enfilée dans l'extrémité fourchue dudit pied 22 ainsi que cela est représenté à la figure 2.

Le pied 22 et l'organe de retenue 21 possèdent ici une partie d'encastrement mutuel 24 et sont assemblés à l'aide de la clavette 25 dont l'extrémité libre est localisée à proximité de la zone 20a et qui est guidée par une nervure de positionnement 27 portée par la face interne de l'élément 20.

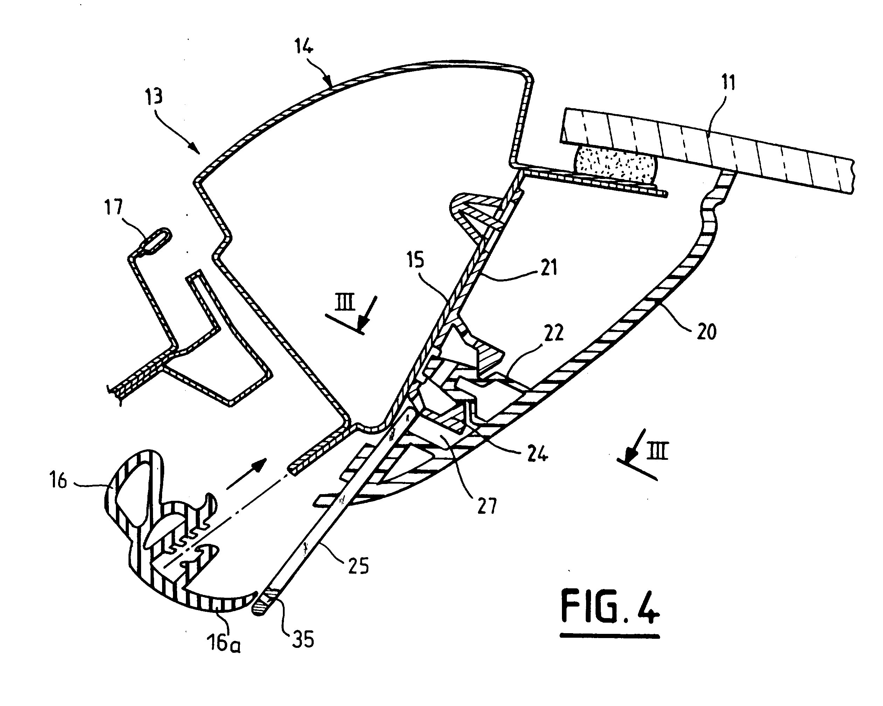

Ainsi que cela est représenté à la figure 3, la clavette 25 s'étend extérieurement de la partie d'encastrement 24 et transversalement à la zone marginale 20a et du bord de recouvrement de l'élément de garnissage 20 par la lèvre 16a. La clavette possède en outre un perçage 35 d'accrochage d'un outil d'extraction de la clavette.

Par voie de conséquence tant que la clavette 25 n'est pas engagée simultanément dans le pied 22 et dans l'élément de garnissage 20 au niveau de leur partie d'encastrement commune 24, il n'est pas possible de chausser la lèvre 16a sur la zone marginale 20a de l'élément de garnissage.

## Revendications

1. Dispositif de fixation d'un élément de garnissage (20) sur un organe de retenue (21) porté par un montant de carrosserie (13) dont une zone marginale (20a) est chaussée par un profil d'étanchéité (16), caractérisé par le fait que la face de l'élément de garnissage tournée vers le montant (13) est surmontée par un pied support d'une clavette (25) de verrouillage dont une extrémité est engagée dans une partie d'encastrement mutuel dedits pied support (20) et organe de retenue (21) et dont l'autre extrémité est localisée à proximité de la zone marginale.

2. Dispositif selon la revendication 1, caractérisé par le fait que la clavette s'étend extérieurement à la partie d'encastrement mutuel du pied support (22) et de l'organe de retenue (21) et transversalement par rapport à la zone marginale (20a) du montant carrosserie (13) et du bord de recouvrement de l'élément de garnissage par le profil d'étanchéité (16).
